(19) Europäisches Patentamt
European Patent Office
Office européen des brevets

(11) **EP 3 556 501 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**10.01.2024 Patentblatt 2024/02**

(45) Hinweis auf die Patenterteilung:
**09.09.2020 Patentblatt 2020/37**

(21) Anmeldenummer: **19166536.3**

(22) Anmeldetag: **01.04.2019**

(51) Internationale Patentklassifikation (IPC):
**B23F 23/00** (2006.01)     **B23F 1/02** (2006.01)
**B23F 5/04** (2006.01)

(52) Gemeinsame Patentklassifikation (CPC):
**B23F 23/006; B23F 1/023; B23F 5/04;**
B23F 21/026; B23F 23/1225

(54) **VERFAHREN ZUM WÄLZSCHLEIFEN EINES ZAHNRAD-WERKSTÜCKS UND SCHLEIFMASCHINE MIT EINER STEUERUNG ZUM WÄLZSCHLEIFEN EINES ZAHNRAD-WERKSTÜCKS**

METHOD FOR GRINDING A COGGED WORKPIECE AND GRINDING MACHINE WITH A CONTROLLER FOR GRINDING A COGGED WORKPIECE

PROCÉDÉ DE RECTIFICATION DE DENTURE PAR GÉNÉRATION D'UNE PIÈCE DE LA ROUE DENTÉE ET MACHINE DE RECTIFICATION DOTÉE D'UNE COMMANDE DE RECTIFICATION DE DENTURE PAR GÉNÉRATION D'UNE PIÈCE DE LA ROUE DENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2018 DE 102018109067**

(43) Veröffentlichungstag der Anmeldung:
**23.10.2019 Patentblatt 2019/43**

(73) Patentinhaber: **Klingelnberg GmbH**
**42499 Hückeswagen (DE)**

(72) Erfinder: **Vogel, Olaf**
**76275 Ettlingen (DE)**

(74) Vertreter: **Janke Scholl Patentanwälte PartG mbB**
**Kaiser-Friedrich-Ring 5**
**40545 Düsseldorf (DE)**

(56) Entgegenhaltungen:
**EP-A2- 3 242 175          WO-A2-2007/139708**
**DE-B3-102012 017 840     DE-T5-112012 006 475**

EP 3 556 501 B2

**Beschreibung**

Hintergrund der Erfindung, Stand der Technik

Gegenstand der Erfindung ist ein Verfahren gemäß Anspruch 1. Insbesondere geht es um ein Verfahren zum Wälzschleifen eines Zahnrad-Werkstücks mit einer mehrfach abrichtbaren Schleifschnecke. Ein derartiges Verfahren und eine derartige Schleifmaschine sind aus dem Dokument DE 10 2012 017 840 B3 bekannt.

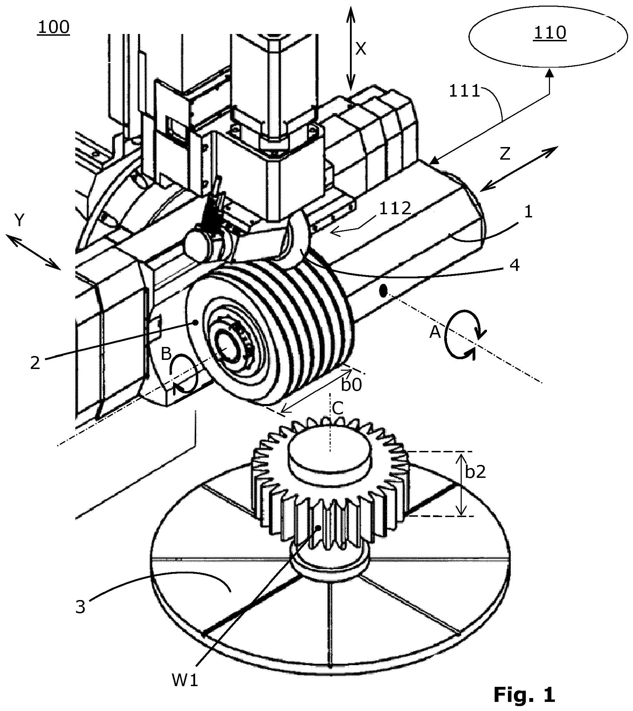

In Fig. 1 sind die Elemente einer beispielhaften Schleifmaschine 100 gezeigt, wobei in dieser Darstellung lediglich die wesentlichen Elemente beschriftet sind, und zwar sind dies die Werkzeugspindel 1 samt eines Schleifwerkzeugs 2 und eine Werkstückspindel 3 mit einem Werkstück W1. Außerdem sind in dieser Darstellung einige der Achsen gezeigt, die zum Wälzschleifen des Werkstücks W1 zum Einsatz kommen können. Es handelt sich hier um drei Linearachsen X, Y und Z. Außerdem gibt es eine Rotationsachse B, um das Schleifwerkzeug 2 drehantreiben zu können. Die Werkzeugspindel 1 samt des Schleifwerkzeugs 2 kann um eine Schwenkachse A geschwenkt werden, um die Steigung der Schleifschnecke 2 mit dem Schrägungswinkel des Werkstücks W1 in Einklang zu bekommen. Weiterhin gibt es eine Rotationsachse C (auch Werkstückachse genannt), um das Werkstück W1 drehantreiben zu können. Anhand der Fig. 1 ist zu erkennen, dass eine ganze Reihe von koordinierten Linear-, Dreh- und Schwenkbewegungen erforderlich sind, um ein Werkstück W1 mit einem Schleifwerkzeug 2 wälzschleifen zu können.

Einer der Faktoren, der einen Einfluss auf die Wirtschaftlichkeit einer solchen Schleifmaschine 100 hat, ist die Standzeit des Schleifwerkzeugs 2 (hier in Form einer Schleifschnecke). Um so schneller das Werkzeug 2 abnutzt, um so weniger Werkstücke W1 können mit einem Werkzeug 2 bearbeitet werden. Es gibt daher verschiedene Strategien, um eine Schleifschnecke 2 möglichst wirtschaftlich einzusetzen.

Unter anderem wird mit verschiedenen Shift-Strategien gearbeitet. Das kontinuierliche Shiften (teilweise auch als Diagonalshiften bezeichnet) ist ein Vorgang, bei dem die Schleifmaschine 100 eine kontinuierliche Shiftbewegung parallel zur Z-Achse ausführt, um die Schleifschnecke 2 relativ zum Werkstück W1 zu verschieben. Durch diese Form des Shiftens wird sichergestellt, dass Bereiche mit neuen, bzw. ausreichend schnittigen Schleifkörnern der Schleifschnecke 2 zum Einsatz kommen. Durch das Shiften wird nicht nur die geometrische Genauigkeit der Zahnrad-Werkstücke W1 sichergestellt, sondern es können weitestgehend auch thermische Schäden an den Zahnflanken verhindert werden.

Es gibt auch nicht-kontinuierliche Shift-Strategien, die zum Beispiel darauf basieren, dass die Schleifschnecke 2 in unterschiedliche Bereiche zum Schruppen und zum Schlichten eines Werkstücks W1 unterteilt wird.

Es gibt auch Shift-Strategien, bei denen ein Shiften jeweils nach dem Bearbeiten eines Werkstücks W1 erfolgt, um z.B. zur Bearbeitung des nächsten Werkstücks einen anderen Bereich der Schleifschnecke 2 einsetzen zu können.

Außerdem wird ein Schleifhub vorgenommen, der erforderlich ist, um Werkstücke W1 über deren gesamte Zahnbreite b2 schleifen zu können. Der Schleifhub umfasst bei einem geradverzahnten Stirnrad W1, wie in Fig. 1 gezeigt, eine Linearbewegung der Schleifschnecke 2 parallel zur X-Achse der Maschine 100.

Die Shift-Strategien für das kontinuierliche Shiften werden gemäß dem Stand der Technik typischerweise durch ein Verhältnis des Shiftwegs zum Hubweg definiert. D.h., beim konventionellen Wälzschleifen wird der Betrag des kontinuierlichen Versetzens der Schleifschnecke 2 durch das konstante Verhältnis Shiftweg zu Hubweg festgelegt, wobei diese Festlegung hubspezifisch erfolgen kann. Bei diesen Shift-Strategien ist der Shiftweg eine Länge entlang der Schneckenachse (hier als B-Achse bezeichnet), d.h. entlang der Schneckenbreite b0 und der Hubweg ist eine Länge entlang der Werkstückachse (hier als C-Achse bezeichnet).

Weiterhin wird eine Zustellbewegung ausgeführt, um einen Zahn der Schleifschnecke 2 bis zu einer endgültigen Tiefe in eine Zahnlücke des Zahnrad-Werkstücks W1 eindringen zu lassen. Die Zustellbewegung erfolgt beim Beispiel der Fig. 1 parallel zur Y-Achse der Maschine 100.

Es besteht der Bedarf das Wälzschleifen mit einer Schleifschnecke weiter zu optimieren.

Aufgabe der vorliegenden Erfindung ist es daher, eine Steuerung oder Software für eine Schleifmaschine zum wälzschleifenden Bearbeiten von Zahnrädern zu entwickeln, die eine reproduzierbar hohe Präzision der schleifenden Bearbeitung und trotzdem eine hohe Effizienz hat. Außerdem soll ein geeignetes Verfahren bereit gestellt werden, dass dazu beiträgt die Effizienz zu verbessern.

Insbesondere geht es darum eine Schleifmaschine für das Wälzschleifen von Stirnrädern bereit zu stellen, die eine gleichbleibend hohe Präzision der schleifenden Bearbeitung einer Serie von Werkstücken ermöglicht.

Ein entsprechendes Verfahren der Erfindung zeichnet sich durch die Merkmale des Patentanspruchs 1 aus.

Das Verfahren zum Wälzschleifen eines Zahnrad-Werkstücks setzt eine abrichtbare Schleifschnecke ein, die um eine Werkzeugrotationsachse drehangetrieben wird, während das Zahnrad-Werkstück um eine Werkstückrotationsachse drehangetrieben wird. Außerdem führt die Schleifschnecke beim Wälzschleifen relativ zum Zahnrad-Werkstück Wälzschleifbewegungen aus. Die Schleifschnecke wird von Zeit zu Zeit oder bei Bedarf einem Abrichtvorgang unterzogen. Nach dem Abrichtvorgang, der dem Abrichten der Schleifschnecke dient, werden zum Wälzschleifen eines Zahnrad-Werkstücks folgende Bewegungen durchgeführt:

- Shiften pro Werkzeugumdrehung der Schleifschnecke relativ zum Zahnrad-Werkstück parallel zu der Werkzeugrotationsachse,
- achsparalleles Relativbewegen pro Werkzeugumdrehung parallel oder schräg zu der Werkstückrotationsachse, die vorzugsweise senkrecht oder schräg zur Werkzeugrotationsachse steht,

wobei ein Verhältnis zwischen dem Shiften und dem achsparallelen Relativbewegen vorgegeben ist, das veränderlich ist, so dass beim Wälzschleifen eines Zahnrad-Werkstücks nach dem Abrichtvorgang ein anderes Verhältnis zum Einsatz kommt als beim Wälzschleifen eines Zahnrad-Werkstücks vor dem Abrichtvorgang.

Das Verändern des Verhältnisses kann vor dem Abrichten, während des Abrichtens oder nach dem Abrichten vorgenommen werden, so dass es beim Wälzschleifen des darauffolgenden Zahnrad-Werkstücks wirksam wird.

Bei mindestens einem Teil der Ausführungsformen wird das Wälzschleifen jeweils mit konstantem Verhältnis vorgenommen.

Bei mindestens einem Teil der Ausführungsformen wird das Wort "veränderlich" verwendet, um vorzugeben, dass das genannte Verhältnis nicht konstant ist.

Bei mindestens einem Teil der Ausführungsformen wird das Wort "veränderlich" verwendet, um vorzugeben, dass das genannte Verhältnis Schritt-für Schritt, vorzugsweise jeweils nach jedem Abrichten der Schleifschnecke, angepasst wird.

Bei mindestens einem Teil der Ausführungsformen geht es um eine spezielle Form des Shiftens, das beim Wälzschleifen mehrerer Zahnrad-Werkstücke nach dem Durchführen eines Abrichtvorgangs ausgeführt wird.

Erfindungsgemäß kommt eine abrichtbare Schleifschnecke zum Einsatz, die mehrfach abgerichtet werden kann, wobei sich durch das Abrichten der Durchmesser der Schleifschnecke reduziert, und wobei das Verhältnis zwischen dem Shiften und dem achsparallelen Relativbewegen mit dem kleiner werdenden Durchmesser der Schleifschnecke verändert wird. D.h., es wird bei diesen Ausführungsformen nicht mit einem festen Verhältnis vom Shiftweg zum Hubweg gearbeitet, sondern dieses Verhältnis wird gezielt Schritt-für-Schritt angepasst. Der Begriff "Hubweg" wird hier teilweise verwendet, da er sich in der Fachliteratur durchgesetzt hat. Gemeint ist damit eine Relativbewegung zwischen Schleifschnecke und Zahnrad-Werkstück, die achsparallel oder schräg zur Werkstückrotationsachse verläuft. Dieses achsparallele Relativbewegen kann z.B. durch das Ansteuern einer einzigen Linearachse (teilweise auch Hubachse genannt) oder durch das Überlagern mehrerer Bewegungen in einer Maschine erzeugt werden.

Erfindungsgemäß wird das Verändern des Verhältnisses zwischen dem Shiften und dem achsparallelen Relativbewegen parallel oder schräg zur Werkstückrotationsachse anhand einer Eingriffsdichte vorgenommen, wobei die Eingriffsdichte eine werkzeugspezifische Größe ist. Dieses Verändern des Verhältnisses wird nicht kontinuierlich während des Wälzschleifen sondern diskontinuierlich (im Sinne von schrittweise), z.B. nach jedem Abrichtvorgang oder nach einer Anzahl von Abrichtvorgängen, vorgenommen.

Bei mindestens einem Teil der Ausführungsformen wird das Verändern des Verhältnisses zwischen dem Shiften und dem achsparallelen Relativbewegen parallel oder schräg zur Werkstückrotationsachse anhand einer Eingriffsdichte vorgenommen, die als werkzeugspezifische Größe definiert ist, wobei das Verändern des Verhältnisses zwischen dem Shiften und der achsparallelen Relativbewegen so vorgenommen wird, dass die Eingriffsdichte während des eigentlichen Wälzschleifens des Zahnrad-Werkstücks konstant oder näherungsweise konstant gehalten werden kann.

Bei mindestens einem Teil der Ausführungsformen kommt eine Schleifmaschine zum Einsatz, die mindestens eine Spindel zum Aufnehmen und Drehantreiben einer Schleifschnecke, eine Spindel zum Aufnehmen und Drehantreiben eines Zahnrad-Werkstücks und mehrere NC-gesteuerte Achsen umfasst, die dazu ausgelegt sind zum Zwecke des Wälzschleifens Relativbewegungen der Schleifschnecke relativ zum Zahnrad-Werkstück auszuführen. Weiterhin umfasst die Schleifmaschine eine Abrichtvorrichtung und eine Steuerung, die mit der Schleifmaschine so verbindbar ist, dass ein Vorgang nach einem Abrichtvorgang durchführbar ist, der ein relatives, achsparalleles Relativbewegen zwischen Schleifschnecke und Zahnrad-Werkstück umfasst, das achsparallel oder schräg zur Werkstückrotationsachse verläuft, und der eine relative Shiftbewegung zwischen Schleifschnecke und Zahnrad-Werkstück umfasst, wobei ein Verhältnis zwischen der Shiftbewegung und dem achsparallelen Relativbewegen vorgebbar ist, das veränderlich ist.

Bei mindestens einem Teil der Ausführungsformen ist die Steuerung so ausgelegt oder programmierbar, dass sie in der Lage ist die Schritte des Verfahrens der Erfindung nach jedem Abrichtvorgang oder nach zwei oder mehr als zwei Abrichtvorgängen auszuführen.

Die Erfindung lässt sich vor allem auf geradverzahnte Stirnräder und schrägverzahnte Stirnräder anwenden. Die Erfindung lässt z.B. auf Beveloide (d.h. auf Zahnräder mit konischer Verzahnung) anwenden.

Vorzugsweise orientiert man sich bei mindestens einem Teil der Ausführungsformen an den Gegebenheiten oder technologischen Möglichkeiten, die sich beim kleinsten Durchmesser der mehrfach abgerichteten Schleifschnecke noch als zuverlässig erwiesen haben. D.h. man kann z.B. von einer werkzeugspezifischen Leistungsgröße ausgehen, die sich in der Praxis bewährt hat. Bei dieser Leistungsgröße handelt es sich um ein Maß für die Schleiffähigkeit der Schleifschnecke, wenn diese aufgrund mehrfachen Abrichtens ihren minimal gültigen Durchmesser erreicht hat. Da man aus Erfahrungswerten weiss, dass die Schleifschnecke beim Erreichen ihres minimal gültigen Durchmessers immer noch eine gute und zuverlässige Schleifleistung erbringt, kann anhand dieser bekannten Schleifleistung eine Extrapolation für eine geänderte Shiftstrategie vorgenommen werden.

Die Erfindung setzt bei mindestens einem Teil der Ausführungsformen ein Maß für die Schleiffähigkeit der Schleifschnecke ein, um anhand dieses Masses das Verhältnis zwischen einer relativen Shiftbewegung und der Hubbewegung (d.h. einem relativen achsparallelen Bewegen parallel oder schräg zur Werkstückrotationsachse) anzupassen.

Erfindungsgemäß wird ein Verhältnis zwischen dem Shiften und dem achsparallelen Relativbewegen parallel oder schräg zur Werkstückrotationsachse vorgegeben, das veränderlich ist.

Um diese Veränderlichkeit technologisch sinnvoll nutzbar zu machen, wird eine Prozessgröße definiert, die hier erfindungsgemäß als Eingriffsdichte bezeichnet wird. Bei den erfindungsgemäßen Ausführungsformen wird die Shiftstrategie in Abhängigkeit der Eingriffsdichte angepasst.

Bei mindestens einem Teil der Ausführungsformen geht man von einer Eingriffsdichte als Maß für einen oberen Grenzwert aus, das sich beim Einsatz einer Schleifschnecke mit deren minimal gültigen Durchmesser bewährt hat. Durch technische Maßnahmen wird beim Einsatz der Schleifschnecke sichergestellt, dass in keinem anderen Bereich der Schleifschnecke eine effektive Eingriffsdichte auftreten kann, die größer ist als der obere Grenzwert.

Bei mindestens einem Teil der Ausführungsformen umfasst Schleifmaschine einen Rechner, oder eine Schnittstelle zum Verbinden mit einem (externen) Rechner, wobei der Rechner dazu auslegt ist, das Verhältnis zwischen der Shiftbewegung und der achsparallelen Relativbewegung vorzugeben.

Bei mindestens einem Teil der Ausführungsformen umfasst die Schleifmaschine einen Rechner, oder eine Schnittstelle zum Verbinden mit einem (externen), wobei der Rechner dazu auslegt ist, in einem vorbereitenden Verfahrensschritt das Ermitteln des Verlaufs von Berührlinien auf Zahnflanken der Schleifschnecke zu ermöglichen, wobei sich die Berührlinien beim Wälzschleifen aus einem Kontakt zwischen dem Zahnrad-Werkstück und der Schleifschnecke ergeben, und wobei ein gegenseitiger Abstand zwischen mindestens zwei benachbarten Berührlinien ermittelbar ist, um daraus das Errechnen einer Eingriffsdichte als Anzahl von Berührpunkten pro Längeneinheit zu ermöglichen.

Bei mindestens einem Teil der Ausführungsformen kann ein externer Rechner, der z.B. über ein internes oder externes Netzwerk mit einer Schnittstelle der Schleifmaschine verbunden werden kann, eingesetzt, um z.B. das Verhältnis zwischen der Shiftbewegung und der achsparallelen Relativbewegung vorzugeben und/oder um mittels einer Software oder eines Software-Modul entsprechende Vorgaben für das Ändern des Verhältnisses an die Schleifmaschine zu übergeben.

Weitere bevorzugte Ausführungsformen sind den jeweiligen Unteransprüchen zu entnehmen.


ZEICHNUNGEN

Weitere Einzelheiten und Vorteile der Erfindung werden im Folgenden anhand von Ausführungsbeispielen und mit Bezug auf die Zeichnung beschrieben.

FIG. 1     zeigt eine schematische Perspektivansicht einer Schleifmaschine, die dazu ausgelegt ist mit einem Schleifwerkzeug ein Werkstück schleifend zu bearbeiten;

FIG. 2A     zeigt eine schematische Seitenansicht eines beispielhaften, geradverzahnten Stirnrads, wobei anhand dieser Ansicht Grundbegriffe definiert werden;

FIG. 2B     zeigt eine schematische Projektion einer Zahnlücke des Stirnrads der Fig. 2A in vergrößerter Darstellung, wobei eine Berührlinie eingezeichnet ist, die entsteht, wenn eine Schleifschnecke zum Schleifen des Stirnrads ohne Hubbewegung eingesetzt werden würde;

FIG. 2C     zeigt eine schematische Projektion einer Zahnlücke des Stirnrads der Fig. 2A in vergrößerter Darstellung, wobei mehrere Berührlinien eingezeichnet sind, die entstehen, wenn eine Schleifschnecke zum Schleifen des Stirnrads mit Hubbewegung eingesetzt wird;

FIG. 3A     zeigt eine schematische Seitenansicht einer beispielhaften Schleifschnecke, wobei anhand dieser Ansicht weitere Grundbegriffe definiert werden;

FIG. 3B     zeigt eine schematische Projektion einer Zahnlücke einer Schleifschnecke der Fig. 3A in vergrößerter Darstellung, wobei mehrere Berührlinien eingezeichnet sind, die entstehen, wenn die Schleifschnecke zum Schleifen eines Stirnrads eingesetzt wird;

FIG. 3C     zeigt eine stark schematisierte Abwicklung einer Zahnlücke der Schleifschnecke der Fig. 3A in vergrößerter Darstellung, wobei nur eine Berührlinie in schematischer Form angedeutet ist;

**FIG. 3D** zeigt eine stark schematisierte Abwicklung einer einzelnen Schneckenflanke der Schleifschnecke der Fig. 3A in vergrößerter Darstellung, wobei mehrere Berührlinien in schematischer Form angedeutet sind.

## DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

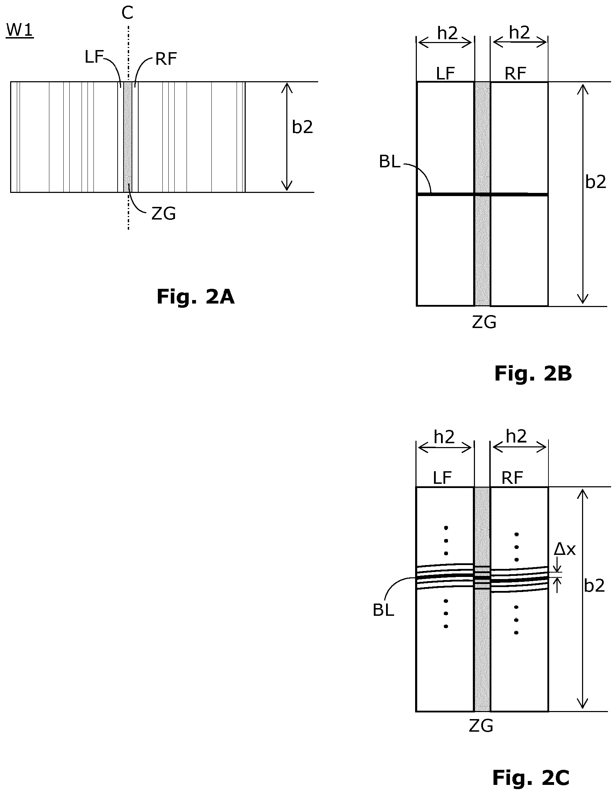

Fig. 2A zeigt eine schematische Seitenansicht eines beispielhaften geradverzahnten Stirnrads W1, wobei anhand dieser Ansicht Grundbegriffe definiert werden. Das Stirnrad W1 hat eine Zahnbreite b2 und es ist drehbar um die Achse C angeordnet. Mittig in der Darstellung der Fig. 2A ist ein Zahngrund ZG grau dargestellt. Die rechteckige Fläche, die sich hier links von dem Zahngrund ZG befindet, repräsentiert eine linke Zahnflanke LF. Die rechteckige Fläche, die sich hier rechts von dem Zahngrund ZG befindet, repräsentiert eine rechte Zahnflanke RF.

Fig. 2B zeigt eine schematische Projektion einer einzelnen Zahnlücke 11 des Stirnrads der Fig. 2A in einer vergrößerten Darstellung. In dieser schematischen Projektion wurde jede Zahnflanke separat projiziert und der Zahngrund ZG, der auch hier grau dargestellt ist, wurde schematisch ergänzt. Bei dieser speziellen Form der Projektion ist die Zahnhöhe h2 der Zähne rechts und links der Zahnlücke 11 deutlich größer als die Lückweite am Zahngrund ZG. Außerdem können die Zahnflanken LF, RF und der Zahngrund ZG in dieser Projektion als rechteckige Flächen dargestellt werden. Die Zahnköpfe sind jeweils rechts und links neben den Zahnflanken LF, RF angeordnet (nicht gezeigt in Fig. 2B).

Wenn man die Zahnlücke 11 des geradverzahnten Stirnrades z.B. mit einer Schleifscheibe ohne Hubbewegung (d.h. ohne eine relative Bewegung achsparallel zur Werkstückrotationsachse C) schleifend bearbeiten würde, so ergäbe sich ein gerader Linienzug als Berührlinie BL. Die Berührlinie BL ergibt sich dabei aus den sich bewegenden Berührpunkten, wenn sich die Schleifscheibe um die Werkzeug(rotations)achse B dreht. Ein gerader Linienzug ergibt sich jedoch nur dann, wenn es keine relative Hubbewegung parallel zur Werkstückachse C gibt, d.h. wenn sich die Schleifscheibe nicht relativ zum Werkstück W1 bewegt.

Wenn eine Schleifschnecke 2 eingesetzt wird, dann ergibt sich auch nur eine einzige Berührlinie BL, wie in Fig. 2B gezeigt, wobei diese Berührlinie BL jedoch bei hintereinander folgenden Eingriffen der Schleifschnecke 2 mehrfach durchlaufen wird.

Der in Fig. 2B gezeigte Fall ist ein Sonderfall, da zum wälzschleifenden Bearbeiten der Zahnflanken LF, RF entlang der gesamten Zahnbreite b2 ein axialer Vorschub parallel zur Werkstückachse C erforderlich ist. Dieser axiale Vorschub wird hier als relative Hubbewegung und allgemeiner auch als relative Bewegung achsparallel zur Werkstückrotationsachse C bezeichnet.

Fig. 2C zeigt eine schematische Projektion derselben Zahnlücke 11 des Stirnrads W1 der Fig. 2A in einer vergrößerten Darstellung, wobei mehrere Berührlinien BL eingezeichnet sind. Diese Berührlinien BL entstehen, wenn eine Schleifschnecke 2 zum Schleifen des Stirnrads W1 eingesetzt wird, die eine relative Bewegung parallel zur Werkstückachse C ausführt, um so die gesamte Zahnbreite b2 schleifend bearbeiten zu können. Es sind hier nur fünf Berührlinien BL eingezeichnet, um die Darstellung nicht zu überfrachten. In der Praxis ergeben sich Berührlinien BL entlang der gesamten Zahnbreite b2.

Da eine relative Bewegung parallel zur Werkstückachse C vorgegeben wird, wandert der Berührpunkt in einer Ebene entlang der Flankenflächen LF, RF, sondern die Berührlinien BL verlaufen mit größer gewähltem Axialvorschub immer schräger. An der Darstellung der Fig. 2C kann man anhand des Abstands zweier benachbarter Berührlinien BL den aktuellen Axialvorschub $\Delta x$ pro Werkstückumdrehung ablesen, wie in Fig. 2C angedeutet.

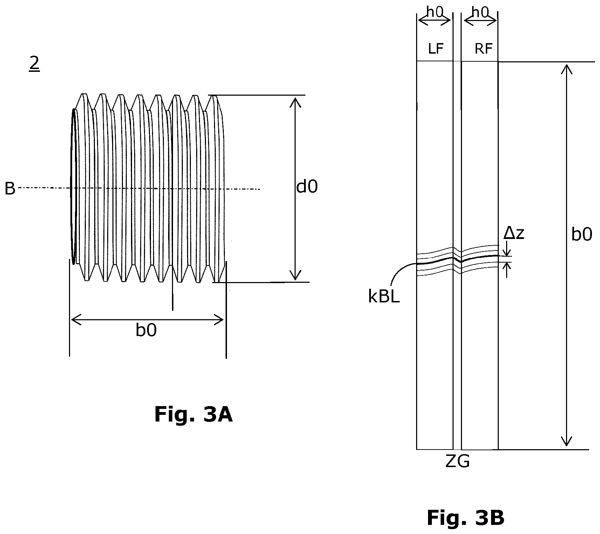

Die Darstellungen der Figuren 2A bis 2C bezogen sich auf ein geradverzahntes Stirnrad W1. Wenn man nun die Situation an einer Schleifschnecke 2 betrachtet, die als Schleifwerkzeug zum Einsatz kommt, kann man dort korrespondierende Berührlinien kBL definieren. Diese korrespondierenden Berührlinien kBL haben jedoch eine deutlich andere Form. Beim Definieren der korrespondierenden Berührlinien kBL wird hier von der Annahme ausgegangen, dass eine Schleifschnecke 2 als Schnecke mathematisch einer Schrägverzahnung mit großem Schrägungswinkel (nahe 90°) bzw. kleinem Steigungswinkel (nahe 0°) entspricht. In Fig. 3A ist eine beispielhafte Schleifschnecke 2 in einer Seitenansicht gezeigt. Die Schleifschnecke 2 hat eine Breite b0 und einen Durchmesser d0. Die Werkzeug(rotations)achse ist mit dem Bezugszeichen B versehen.

In Fig. 3B ist eine Projektion einer Zahnlücke der Schleifschnecke 2 in vergrößerter Darstellung gezeigt. Diese Projektion gleicht im Prinzip der Projektion der Figuren 2B und 2C, wobei jedoch das Verhältnis von Zahnbreite zu Zahnhöhe deutlich größer ist. Die Abbildung der Fig. 3B ist nicht maßstäblich. In dieser Radialprojektion kann man wiederum die beiden Zahnflanken LF und RF, sowie den Zahngrund ZG erkennen. Die Zahnflanken LF und RF sowie die Zahnköpfe (links und rechts neben den Zahnflanken LF und RF) sind mit Schleifkörnern belegt, die hier jedoch nicht zu erkennen sind. Die Länge der Zahnflanken LF und RF wird als Schneckenbreite b0 und die Höhe der Zahnflanken LF und RF wird als Zahnhöhe h0 bezeichnet.

An der Darstellung der Fig. 3B kann man anhand des Abstands zweier benachbarter Berührlinien kBL den aktuellen Axialvorschub $\Delta z$ der Schleifschnecke 2 pro Werkzeugumdrehung (d.h. pro Umdrehung der Schleifschnecke 2) ablesen. Der Axialvorschub $\Delta z$ entspricht dem Shiftweg pro Werkzeugumdrehung.

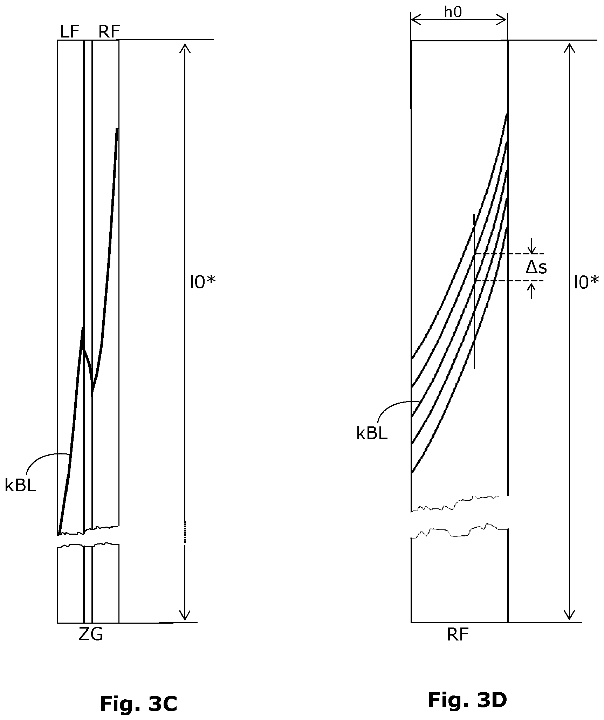

Aufgrund des großen Schrägungswinkels bzw. der kleinen Steigung, zeigt die Projektion der Fig. 3B nur ein stark verzerrtes Bild der tatsächlich zum Schleifen nutzbare Flankenflächen. Daher wird in Fig. 3C eine Abwicklung der Schneckenflanken in einer schematischen, stark vereinfachten Darstellung gezeigt.

Die Abwicklung der Schneckenflanken erhält man, indem man z.B. den Mittenzylinder der Schleifschnecke 2 betrachtet. Dieser Mittenzylinder schneidet die Flankenflächen der Flanken LF, RF in einer Schraubenlinie (bei einer modifizierten Schleifschnecke 2 handelt es sich im Allgemeinen nur näherungsweise um eine Schraubenlinie). Die Länge dieser Schraubenlinie ergibt sich jeweils als Quotient der Schneckenbreite b0 und dem Sinus des jeweiligen Steigungswinkels der Zahnflanke LF, RF an dem Mittenzylinder (Durchmesser des Zylinders). Mit wachsendem Durchmesser des Zylinders nimmt die Länge der Schraubenlinie zu. D.h. am Kopfzylinder ist die Länge der Schraubenlinie am größten. Der Unterschied zwischen der Länge der Schraubenlinie am Zahnkopf und am Zahnfuß relativ zur Schraubenlänge ist klein, da die Zahnhöhe h0 relativ klein bezüglich der Schneckenbreite b0 ist.

Es kann nun ein Bezugsdurchmesser mit einer zugehörenden Bezugsschraubenlinie und einer Bezugsschraubenlänge l0* wie folgt definiert werden:

$$l0^* = b0 / \sin(\gamma 0^*) \qquad \text{[Gleichung 1].}$$

$\gamma 0^*$ ist der Steigungswinkel am Bezugsdurchmesser der Schleifschnecke 2. Aus dieser Umrechnung ergibt sich die gestreckte Darstellung der Fig. 3C, wobei im Prinzip die Darstellung der Fig. 3B um den Faktor $1/\sin(\gamma 0^*)$ gestreckt wurde. Es ist zu beachten, dass die Berührlinie kBL, die in Fig. 3C gezeigt ist, eigentlich noch deutlich mehr gestreckt werden müsste, um der Realität zu entsprechen. Außerdem ist in Fig. 3C nur eine Berührlinie kBL gezeigt, obwohl die gesamten Flanken LF, RF mit solchen Berührlinien kBL bedeckt sein müssten.

In Fig. 3D ist nun die Abwicklung einer einzigen Schneckenflanke (hier der Flanke RF) in schematischer Form gezeigt. Es sind hier mehrere Berührlinien kBL versetzt zueinander gezeigt, die hier der Einfachheit halber identisch gewählt wurden. Anhand des Abstandes zweier benachbarter Berührlinien kBL, kann man in Fig. 3D den Schraubweg pro Werkzeugumdrehung ablesen. Dieser Schraubweg entspricht dem Shiftweg $\Delta s$ pro Werkzeugumdrehung geteilt durch den Sinus des Steigungswinkels $\gamma 0^*$. Bei den Berührlinien kBL, die in Fig. 3D gezeigt sind, handelt es sich um Wälzlinien auf einem Rechteck mit den Seitenlängen h0 (Zahnhöhe) und l0* (Bezugsschraubenlinienlänge). Der Abstand der Berührlinien kBL in dieser Abwicklung entspricht somit dem Schraubweg pro Werkzeugumdrehung um die Werkzeug(rotations)achse B. Dieser Schraubweg ergibt sich gemäß obiger Gleichung [1] aus dem Shiftweg $\Delta s$ pro Werkzeugumdrehung.

Es lässt sich nun ableiten, dass man nach einem Abrichtvorgang durch das Anpassen des Verhältnisses zwischen dem Shiften und dem achsparallelen Bewegen eine bessere Nutzung der Schleifkörner erzielen kann. Bei mindestens einem Teil der Ausführungsformen wird dieses Verhältnis daher nach einem Abrichtvorgang oder nach mehreren Abrichtvorgängen angepasst. Mit anderen Worten kommt somit beim Wälzschleifen mit einer Schleifschnecke 2 mit großem Durchmesser d1 ein anderes Verhältnis der Relativbewegung achsparallel oder schräg zur Werkstückrotationsachse C zum Shiftweg zum Einsatz, als beim Schleifen mit einer Schleifschnecke 2, deren effektiver Durchmesser d0 durch das Abrichten kleiner geworden ist.

Im Folgenden wird der Begriff der "Eingriffsdichte EgD" eingeführt. Diese Eingriffsdichte EgD, die entlang der Schraubenlinien bzw. der Zahnlängsrichtung betrachtet wird, ist als reziproker Wert zum Schraubweg pro Werkzeugumdrehung definiert. Es gilt im Zusammenhang mit Fig. 3B die folgende Gleichung:

$$EgD = (\Delta z / \sin \gamma 0^*)^{-1} \qquad \text{[Gleichung 2]}$$

Es gilt im Zusammenhang mit Fig. 3D die folgende Gleichung:

$$EgD = \Delta s \cdot \sin \gamma 0^* \qquad \text{[Gleichung 3]}$$

D.h., die Eingriffsdichte EgD definiert die Anzahl der Eingriffe pro Schraubweg. Die Eingriffsdichte EgD ist beim maximalen Schleifschnecken-Durchmesser d0max deutlich geringer als beim minimalen Schleifschnecken-Durchmesser d0min (wenn das Verhältnis von Shiftweg zur achsparallelen Bewegung konstant gehalten wird).

Durch die Definition der Eingriffsdichte EgD, wird nun erstmals eine quantitative Aussage möglich. Anhand dieser quantitativen Aussage kann nun die Schleifstrategie angepasst werden, um die Schleifschnecke 2 besser nutzen zu können. Das hat wiederum zur Folge, dass mit einer Schleifschnecke 2 mehr Werkstücke W1 geschliffen werden können als zuvor, wobei durch die Anwendung der neuen Schleifstrategie (genauer gesagt handelt es sich um ein Handhabungsstrategie) keine Verschlechterung der Oberflächenqualität der geschliffenen Zahnflanken verursacht wird.

Im Folgenden wird anhand eines Zahlenbeispiels die Anwendung der Eingriffsdichte EgD zur Festlegung einer neuen Handhabungsstrategie erläutert.

Es wird hier exemplarisch von einem konstanten Hub (d.h. mit einer konstanten achsparallelen Relativbewegung parallel oder schräg zur Werkstückrotationsachse C) mit einem Axialvorschub von 0,3 mm/Werkstückumdrehung ausgegangen (wie bisher beim Stand der Technik). Außerdem wird angenommen, dass die Schleifschnecke 2 einen maximalen Durchmesser d0max = 350mm und eine minimalen Durchmesser d0min = 220mm hat. Außerdem hat die Schleifschnecke 2 eine Gangzahl von 5 und das Werkstück W1 ist ein Stirnrad mit einer Zähnezahl von 29.

Der Axialvorschub lässt sich wie folgt auf die Werkzeugumdrehung umrechnen. Der auf die Werkzeugumdrehung umgerechnete Axialvorschub entspricht dem Hubweg pro Werkzeugumdrehung, d.h.:

$$\frac{0,3mm \cdot 5}{29} = 0,052mm \, / \, Werkzeugumdrehung$$

Der Shiftweg pro Werkzeugumdrehung entspricht dem Shiftweg pro Eingriff eines Schneckenzahns der Schleifschnecke 2, wie folgt:

$$\frac{0,025mm}{mm} \cdot \frac{0,052mm}{Werkzeugumdrehung} = 1,3 \mu m \, / \, Werkzeugumdrehung$$

Daraus kann man die Anzahl der Eingriffe pro Shiftweg in axialer Richtung errechnen, und es ergeben sich 769 Eingriffe pro mm Schneckenbreite.

Diese Größen sind allesamt unabhängig vom effektiven Durchmesser d0 der Schleifschnecke 2. Wenn man hingegen die mit Schleifkörnern besetzte (Flanken-)Fläche entlang der Schneckenbreite b0 betrachtet, spielt der Steigungswinkel eine Rolle. Beim Durchmesser d0max= 350mm beträgt der Steigungswinkel nur 2,05°. Beim Durchmesser d0min = 220mm hingegen beträgt der Steigungswinkel 3,26°.

Der Schraubweg pro Werkzeugumdrehung entspricht dem Weg entlang der Flankenfläche. Bei einer Schleifschnecke 2 mit dem Durchmesser d0max, wird der Schraubweg pro Werkzeugumdrehung wie folgt aus Gleichung 2 ermittelt:

$$\left( \frac{1,3 \mu m}{Werkzeugumdrehung} \right) / \sin(2,05^0) = 36,3 \, \mu m \, / \, Werkzeugumdrehung$$

Bei einer Schleifschnecke 2 mit dem Durchmesser d0min, wird der Schraubweg pro Werkzeugumdrehung wie folgt aus Gleichung 2 ermittelt:

$$\left( \frac{1,3 \mu m}{Werkzeugumdrehung} \right) / \sin(3,26^0) = 22,9 \, \mu m \, / \, Werkzeugumdrehung$$

Der Schraubweg pro Werkzeugumdrehung ist somit bei einer Schleifschnecke 2 mit kleinem Durchmesser deutlich kleiner als bei einer Schleifschnecke 2 mit großem Durchmesser. Durch den sich durchs Abrichten ändernden Durchmesser ändert sich somit der Schraubweg.

Die Anzahl der Eingriffe pro Schraubweg (diese Größe wird hier per Definitionem als Eingriffsdichte EgD bezeichnet) beträgt bei einer Schleifschnecke 2 mit dem Durchmesser d0max: EgD = 27,5 Eingriffe pro mm (entlang der Flankenfläche). Die Anzahl der Eingriffe pro Schraubweg beträgt bei einer Schleifschnecke 2 mit dem Durchmesser d0min: EgD = 43,7 Eingriffe pro mm (entlang der Flankenfläche).

Die Eingriffsdichte EgD ist beim maximalen Durchmesser d1max deutlich geringer als beim minimalen Durchmesser d1min, wenn das Verhältnis von Shiftweg zur achsparallelen Bewegung konstant gehalten wird.

Nun kann bei mindestens einem Teil der Ausführungsformen anhand des folgenden Ansatzes eine Festlegung einer neuen Schleif- bzw. Handhabungsstrategie erfolgen. Wenn die Schleifschnecke 2 so entwickelt wurde, dass sie auch beim Erreichen des minimalen Durchmessers d0min noch immer zuverlässig arbeitet und gute Schleifergebnisse liefert, dann kann ausgehend von der Eingriffsdichte EgD = 43,7 Eingriffe pro mm eine geeignete Anpassung der Schleif- bzw. Handhabungsstrategie wie folgt vorgenommen werden.

Anhand der Gleichung 2 kann rückwärts ein neuer Schraubweg pro Werkzeugumdrehung wie folgt ermittelt werden:

$$\frac{36,3\,\mu m}{22,9\,\mu m} = 1,58 \qquad \Rightarrow \qquad \frac{1,3\,\mu m}{1,58} = 0,82\,\mu m\,.$$

D.h. der Schraubweg pro Werkzeugumdrehung kann von $1,3\,\mu m$ auf $0,82\,\mu m$ reduziert werden. Ein Schraubweg von $0,82\,\mu m$ pro Werkzeugumdrehung entspricht dann einer Eingriffsdichte pro Shiftweg (statt einer Eingriffsdichte EgD pro Schraubweg) von 1222 Eingriffen pro mm (entlang der Schneckenbreite). Daraus lässt sich ein Shiftweg pro Hubweg von 0,016mm/mm errechnen (allgemein wird dieses Verhältnis hier auch als Verhältnis des Shiftwegs zu der achsparallelen Bewegung parallel oder schräg zur Werkstückrotationsachse C bezeichnet). Dies entspricht einer Ersparnis von 36% am erforderlichen Shiftweg für den betrachteten Hub. Diese Betrachtung ist unabhängig vom konkreten Axialvorschub und gilt somit für Schlicht- und Schrupphübe.

Eine beispielhafte neue Schleif- oder Handhabungsstrategie kann nun z.B. wie folgt aussehen. Beim Erreichen des minimalen Durchmessers d0min kann z.B. ein Shiftweg pro Hubweg von 0,025mm/mm vorgegeben werden. Beim Schleifen mit einer Schleifschnecke 2, deren Durchmesser dem Maximaldurchmesser d0max entspricht, kann z.B. ein Shiftweg pro Hubweg von 0,016mm/mm vorgegeben werden. Das Schleifen mit einer neuen (noch nicht oder nur wenig abgerichteten Schleifschnecke 2) beginnt mit einem Verhältnis von Shiftweg zum Hubweg von 0,016. Wenn man von einem linearen Zusammenhang ausgeht, dann kann nach jedem Abrichten das Verhältnis von Shiftweg zum Hubweg schrittweise linear von 0,016 bis 0,025 verändert werden.

Dieser Ansatz liefert sehr gute Ergebnisse, da genauere Untersuchungen gezeigt haben, dass die Abhängigkeit der Eingriffsdichte EgD vom Schleifschnecken-Durchmesser d0 näherungsweise linear verläuft.

Wenn man weiter davon ausgeht, dass beim Anwenden der konventionellen kontinuierlichen Shiftstrategie mit konstantem Verhältnis von Shiftweg zum Hubweg 28 Werkstücke W1 je Abrichten bei ca. 270 möglichen Abrichtvorgängen bearbeitet werden konnten, so konnte man mit dieser konventionellen Strategie ca. 28* 270 = 7560 Werkstücke W1 mit einer Schleifschnecke 2 schleifen.

Mit der neuen Shift- bzw. Handhabungsstrategie, die ein veränderliches Verhältnis vorsieht, kann man statt der 28 Werkstücke ca. 43,5 Werkstücke beim Maximaldurchmesser d0max vor dem ersten Abrichten fertigen. Wenn man von einem linearen Zusammenhang ausgeht, kann die Anzahl der über den gesamten Durchmesserbereich der Schleifschnecke 2 fertigbaren Werkstücke W1 wie folgt abschätzen:

$$\left(\frac{43+28}{2}\right) \cdot 270 = 9652 \ \text{Werkstücke.}$$

9652 Werkstücke sind ca. 28% mehr als 7560 Werkstücke, die mit der konventionellen, kontinuierlichen Shiftstrategie geschliffen werden können. D.h. durch das lineare Anpassen des Verhältnisses von Shiftweg zum Hubweg jeweils nach dem Abrichten kann das Schleifverfahren deutlich optimiert werden.

Die Anpassung des Verhältnisses von Shiftweg zur achsparallelen Relativbewegung kann auch in Abhängigkeit von dem effektiven Durchmesser d0 der Schleifschnecke 2 vorgenommen werden. Zu diesem Zweck kann der Durchmesser d0 jeweils nach dem Abrichten ermittelt werden, um dann auf rechnerischem Wege unter Einsatz einer Gleichung das Verhältnis von Shiftweg zur achsparallelen Bewegung für die Schleifvorgänge, die nach dem Abrichten folgend, vorzugeben.

Statt der Zahnhöhe h0 kann zum rechnerischen Annähern an die Zahnflankenfläche auch die skalierte Größe h0/cos($\alpha$n0) genutzt werden, wobei $\alpha$n0 der Normaleingriffswinkel ist. Da die Eingriffsdichte EgD in den oben beschriebenen Ausführungsformen der Einfachheit halber in Richtung der Schraubenlinien (Zahnlängsrichtung) betrachtet wurde (siehe auch Fig. 3D), war dies dort nicht notwendig.

Eine genauere Betrachtung der Abstände zwischen Berührlinien kBL kann z.B. erfolgen, in dem der Abstand $\Delta z$ nicht entlang der Schraubenlinie (wie in Fig. 3D gezeigt), sondern senkrecht zu den Berührlinien kBL gemessen oder berechnet wird. Für die Bestimmung einer entsprechenden Eingriffsdichte entlang des senkrechten Abstands zwischen den Berührlinien kBL, muss die soeben erwähnte Umrechnung mit dem Normaleingriffswinkel $\alpha$n0 vorgenommen werden. Weiterhin sollte aber auch die tatsächliche Schräglage der Berührlinien BL bestimmt und berücksichtigt werden.

Aus diesem Weg erhält man eine etwas genauere Gleichung, die bei allen Ausführungsformen nach dem Abrichten zum Anpassen des Verhältnisses von Shiftweg zur achsparallelen Bewegung genutzt werden kann.

Statt eine lineare Anpassung des Verhältnisses von Shiftweg zur achsparallelen Relativbewegung vorzunehmen, kann diese Anpassung bei allen Ausführungsformen nach dem Abrichten auch nicht-linear vorgenommen werden.

Statt eine lineare Anpassung des Verhältnisses von Shiftweg zur achsparallelen Relativbewegung vorzunehmen, kann diese Anpassung bei allen Ausführungsformen nach dem Abrichten auch durch das Auslesen von zuvor abgespeicherten Werten aus einer Datenbank (z.B. durch einen table-look-up) vorgenommen werden. Bei diesen Ausführungsformen kommt dann eine schrittweise (bereichsweise) Anpassung des Verhältnisses von Shiftweg zur achsparallelen Relativbewegung zur Anwendung.

Eine Schleifmaschine 100 kann z.B. mit einer Werkzeugspindel 1 zum Aufnehmen und Drehantreiben eines Schleifwerkzeugs 2 um eine Werkzeugrotationsachse B (kurz auch als Werkzeugachse bezeichnet) ausgestattet sein. Weiterhin kann die Schleifmaschine 100 beispielsweise eine Werkstückspindel 3 zum Aufnehmen eines Werkstücks W1 umfassen. Außerdem umfasst die Maschine 100 eine Abrichtvorrichtung 112 mit einem Abrichter 4 und die Maschine 100 ist so ausgelegt, dass mittels des Abrichters 4 ein Abrichtvorgang ohne Umspannen des Schleifwerkzeugs 2 erfolgen kann. In Fig. 1 ist in einer Momentaufnahme das Abrichten des Schleifwerkzeugs 2 mit dem Abrichter 4 gezeigt.

Weiterhin umfasst die Schleifmaschine 100 eine Steuerung 110. In Fig. 1 ist diese Steuerung 110 lediglich durch ein Oval angedeutet, das mit der Schleifmaschine 100 und/oder mit der Abrichtvorrichtung 112 permanent oder bei Bedarf in Kommunikationsverbindung steht. Die Kommunikationsverbindung ist mit dem Bezugszeichen 111 versehen.

Bei einem Teil der Ausführungsformen übernimmt Steuerung 110 das lineare oder nicht-lineare Anpassen des Verhältnisses von Shiftweg zum Hubweg jeweils nach dem Abrichten der Schleifschnecke 2.

Die Anordnung und Ausgestaltung der Achsen der Schleifmaschine 100 sind lediglich als Beispiel zu verstehen. Es gibt zahlreiche andere Achskonstellationen, die auch geeignet sind. Auch müssen die Relativbewegungen, die hier beschrieben sind, nicht durch das Bewegen einer einzelnen Achse (z.B. der Hubachse X) ausgeführt werden. Jede der Bewegungen kann auch durch die Überlagerung von zwei oder mehr als zwei Achsbewegungen erzeugt werden.

Das Anpassen des genannten Verhältnisses erfolgt vorzugsweise nach jedem Abrichten der Schleifschnecke 2. Das Anpassen des genannten Verhältnisses kann aber auch z.B. nur nach jedem zweiten Abrichten oder in einem anderen Intervall vorgenommen werden.

Das Anpassen "nach dem Abrichten" schliesst auch ein Anpassen mit ein, das erst unmittelbar vor dem erneuten Einsatz einer zuvor abgerichteten Schleifschnecke 2 zum Wälzschleifen erfolgen kann.

Das Anpassen des genannten Verhältnisses kann in kleinen Schritten erfolgen. Wenn z.B. mit einer bestimmten Schleifschnecke 2 insgesamt 2000 Werkstücke W1 geschliffen werden können und wenn die Eingriffsdichte EgD zwischen 0,01 und 0,03 liegt, dann kann die Differenz zwischen 0,03 und 0,01 durch 2000 geteilt werden. Dadurch erhält man 2000 Mikroschritte mit je 0,00001mm/mm. In diesem Fall nimmt die Steuerung 110 Schritt für Schritt kleine Änderungen des Verhältnisses jeweils nach jedem Abrichtvorgang vor.

Bezugszeichen

| Werkzeugspindel | 1 |
|---|---|
| Schleifwerkzeug | 2 |
| 1. Werkstückspindel | 3 |
| Abrichter | 4 |
|  |  |
| Zahnlücke | 11 |
|  |  |
| Schleifmaschine | 100 |
| Steuerung | 110 |
| Kommunikationsverbindung | 111 |
| Abrichtvorrichtung | 112 |

(fortgesetzt)

| | |
|---|---|
| Schwenkachse | A |
| Normaleingriffswinkel | $\alpha n0$ |
| Werkstückachse | C |
| | |
| Werkzeug (rotations)achse | B |
| Berührlinie | BL |
| korrespondierende Berührlinie | kBL |
| Schneckenbreite | b0 |
| Zahnbreite | b2 |
| Durchmesser | d0 |
| maximaler Schleifschnecken-Durchmesser | d0max |
| minimaler Schleifschnecken-Durchmesser | d0min |
| Länge entlang der Abwicklung/Schraubenlinie | $\Delta s$ |
| Axialvorschub pro Werkstückumdrehung | $\Delta x$ |
| Axialvorschub der Schleifschnecke pro | $\Delta z$ |
| Werkzeugumdrehung (Schneckenumdrehung) | |
| Eingriffsdichte | EgD |
| Zahnhöhe | h0 |
| Steigungswinkel am Bezugsdurchmesser | $\gamma 0^*$ |
| linke Flanke | LF |
| Bezugsschrauben(linien)länge | l0* |
| rechte Flanke | RF |
| (Zahnrad-)Werkstück | W1 |
| Vertikalachse | X |
| horizontale Linearachse | Y |
| horizontale Linearachse | Z |
| Zahngrund | ZG |

**Patentansprüche**

1. Verfahren zum Wälzschleifen eines Zahnrad-Werkstücks (W1) mit einer abrichtbaren Schleifschnecke (2), wobei während des Wälzschleifens die Schleifschnecke (2) um eine Werkzeugrotationsachse (B) drehangetrieben und das Zahnrad-Werkstück (W1) um eine Werkstückrotationsachse (C) drehangetrieben und relative Bewegungen zwischen der Schleifschnecke (2) und dem Zahnrad-Werkstück (W1) ausgeführt werden, und wobei nach dem Ausführen eines Abrichtvorgangs der Schleifschnecke (2), der mittels eines drehantreibbaren Abrichters (4) durchgeführt wird, die folgenden Schritte durchgeführt werden:

- Ausführen einer relativen Shiftbewegung zwischen der Schleifschnecke (2) und dem Zahnrad-Werkstück (W1) parallel zu der Werkzeugrotationsachse (B),
- Ausführen einer achsparallelen Relativbewegung zwischen der Schleifschnecke (2) und dem Zahnrad-Werkstück (W1) parallel oder schräg zu der Werkstückrotationsachse (C),
- wobei ein Verhältnis zwischen der Shiftbewegung und der achsparallelen Relativbewegung vorgegeben ist, das veränderlich ist, so dass beim Wälzschleifen eines Zahnrad-Werkstücks nach dem Abrichtvorgang ein anderes Verhältnis zum Einsatz kommt als beim Wälzschleifen eines Zahnrad-Werkstücks vor dem Abrichtvorgang,

- wobei sich durch jeden Abrichtvorgang der Durchmesser (d0) der Schleifschnecke (2) reduziert, und wobei nach jedem Abrichtvorgang das Verhältnis zwischen der Shiftbewegung und der achsparallelen Relativbewegung vergrößert wird,

- wobei anhand einer Eingriffsdichte (EgD), die werkzeugspezifisch ist, das Verändern des Verhältnisses zwischen der Shiftbewegung und der achsparallelen Relativbewegung vorgenommen wird,

- wobei in einem vorbereitenden Verfahrensschritt der Verlauf von Berührlinien (kBL) auf Zahnflanken der Schleifschnecke (2) ermittelt wird, wobei sich die Berührlinien (kBL) beim Wälzschleifen aus einem Kontakt zwischen dem Zahnrad-Werkstück (W1) und der Schleifschnecke (2) ergeben, und wobei ein gegenseitiger Abstand zwischen mindestens zwei benachbarten Berührlinien (kBL) ermittelt wird, um daraus die Eingriffsdichte (EgD) als Anzahl von Berührpunkten pro Längeneinheit zu errechnen und

- wobei die Eingriffsdichte (EgD) als reziproker Wert zu einem Schraubweg pro Werkzeugumdrehung definiert ist.

**2.** Verfahren nach Anspruch 1, **dadurch gekennzeichnet, dass** anhand dieser Eingriffsdichte (EgD) eine Schleifstrategie für das Wälzschleifen eines Zahnrad-Werkstücks (W1) definiert wird, wobei die Schleifstrategie eine Änderung des Verhältnisses zwischen der Shiftbewegung und der achsparallelen Relativbewegung umfasst.

**3.** Verfahren nach Anspruch 1 oder 2, **dadurch gekennzeichnet, dass** anhand dieser Eingriffsdichte (EgD) das Verhältnis zwischen dem Shiften und dem achsparallelen Relativbewegen (2) definiert wird.

**4.** Verfahren nach einem der Ansprüche 1 - 3, **dadurch gekennzeichnet, dass** das Verändern des Verhältnisses zwischen der Shiftbewegung und dem achsparallelen Relativbewegen so vorgenommen wird, dass die Eingriffsdichte (EgD) beim Wälzschleifen des Zahnrad-Werkstücks (W1) konstant oder näherungsweise konstant bleibt, obwohl sich durch das Ausführen des Abrichtvorgangs der Durchmesser (d0) der Schleifschnecke (2) reduziert.

**Claims**

**1.** A method for the generating grinding of a gear wheel workpiece (W1) using a dressable worm grinding wheel (2), wherein, during the generating grinding, the worm grinding wheel (2) is rotationally driven about a tool axis of rotation (B) and the gear wheel workpiece (W1) about a workpiece axis of rotation (C), and relative movements are executed between the worm grinding wheel (2) and the gear wheel workpiece (W1), and wherein after the execution of a dressing procedure of the worm grinding wheel (2), which is carried out by means of a rotationally-drivable dressing unit (4), **characterized in that** the following steps are carried out:

- executing a relative shift movement between the worm grinding wheel (2) and the gear wheel workpiece (W1) parallel to the tool axis of rotation (B),
- executing an axially-parallel relative movement between the worm grinding wheel (2) and the gear wheel workpiece (W1) in parallel or diagonally to the workpiece axis of rotation (C),
- wherein a ratio between the shift movement and the axially-parallel relative movement is specified, which is variable, so that during the generating grinding of a gear wheel workpiece after the dressing procedure, a different ratio is used than during the generating grinding of a gear wheel workpiece before the dressing procedure,
- wherein the diameter (d0) of the worm grinding wheel (2) is reduced by each dressing procedure, and wherein the ratio between the shift movement and the axially-parallel relative movement is increased after each dressing procedure
- wherein, on the basis of an engagement density (EgD), which is tool-specific, the change of the ratio between the shift movement and the axially-parallel relative movement is performed,
- wherein, in a preparatory method step, the profile of contact lines (kBL) on tooth flanks of the worm grinding wheel (2) is determined, wherein the contact lines (kBL) result during the generating grinding from a contact between the gear wheel workpiece (W1) and the worm grinding wheel (2), and wherein a mutual spacing between at least two adjacent contact lines (kBL) is determined to compute an engagement density (EgD) therefrom as a number of contact points per unit of length
- wherein the engagement density (EgD) is defined as a reciprocal value to a helix travel per tool revolution.

**2.** The method according to claim 1, **characterized in that**, on the basis of this engagement density (EgD), a grinding strategy for the generating grinding of a gear wheel workpiece (W1) is defined, wherein the grinding strategy comprises a change of the ratio between the shift movement and the axially-parallel relative movement.

3. The method according to claim 1 or 2, **characterized in that**, on the basis of this engagement density (EgD), the ratio between the shifting and the axially-parallel relative movement (2) is defined.

4. The method according to any one of claims 1 - 3, **characterized in that** the change of the ratio between the shift movement and the axially-parallel relative movement is performed so that the engagement density (EgD) remains constant or approximately constant during the generating grinding of the gear wheel workpiece (W1), although the diameter (d0) of the worm grinding wheel (2) is reduced by the execution of the dressing procedure.

**Revendications**

1. Procédé pour rectifier une pièce de roue dentée (W1) à l'aide d'une meule à vis sans fin abrasive (2), dans lequel, pendant la rectification, la meule à vis sans fin (2) est entraînée en rotation autour d'un axe de rotation d'outil (B) et la pièce de roue dentée (W1) est entraînée en rotation autour d'un axe de rotation de pièce (C) et des mouvements relatifs sont effectués entre la meule à vis sans fin (2) et la pièce de roue dentée (W1), **caractérisé en ce que**, après l'opération de dressage de la meule à vis sans fin (2) effectuée à l'aide d'une machine à dresser (4) pouvant être entraînée en rotation, on réalise les étapes suivantes consistant à :

   - réaliser un mouvement de décalage relatif par tour d'outil entre la meule à vis sans fin (2) et la pièce de roue dentée (W1) parallèlement à l'axe de rotation d'outil (B),
   - réaliser un mouvement relatif parallèle à l'axe par tour de pièce entre la meule à vis sans fin (2) et la pièce de roue dentée (W1) parallèlement ou de façon oblique par rapport à l'axe de rotation de pièce (C), dans lequel il est prédéfini un rapport entre le mouvement de décalage et le mouvement relatif parallèle à l'axe qui est variable, de sorte que, lors de la rectification d'une pièce de roue dentée après l'opération de dressage, on utilise un rapport différent de celui utilisé lors de la rectification d'une pièce de roue dentée avant l'opération de dressage,
   - dans lequel, à chaque opération de dressage, le diamètre (d0) de la meule à vis sans fin (2) se réduit et **en ce que**, après chaque opération de dressage, le rapport entre le mouvement de décalage et le mouvement relatif parallèle à l'axe augmente,
   - dans lequel, en s'appuyant sur la densité de prise (EgD) qui est spécifique à l'outil, on procède à la modification du rapport entre le mouvement de décalage et le mouvement relatif parallèle à l'axe.
   - dans lequel, dans une étape de procédé préparatoire, on détermine le tracé des lignes de contact (kBL) sur les flancs de dent de la meule à vis sans fin (2), les lignes de contact (kBL), lors de la rectification, résultant d'un contact entre la pièce de roue dentée (W1) et la meule à vis sans fin (2), et dans lequel on détermine une distance réciproque entre au moins deux lignes de contact adjacentes (kBL) pour calculer une densité de prise (EgD) sous la forme d'un nombre de points de contact par unité de longueur,
   - que la densité de prise (EgD) est définie le long d'hélices de la meule à vis sans fin (2).

2. Procédé selon la revendication 1, **caractérisé en ce que**, à l'aide de cette densité de prise (EgD), il est défini une stratégie de meulage pour la rectification d'une pièce de roue dentée (W1), la stratégie de meulage comprenant une modification du rapport entre le mouvement de décalage et le mouvement relatif parallèle à l'axe.

3. Procédé selon la revendication 1 ou 2, **caractérisé en ce que**, à l'aide de cette densité de prise (EgD), il est défini le rapport entre le décalage et le mouvement relatif parallèle à l'axe (2).

4. Procédé selon l'une des revendications 1 - 3, **caractérisé en ce que** la modification du rapport entre le mouvement de décalage et le mouvement relatif parallèle à l'axe est effectuée de telle sorte que la densité de prise (EgD) lors de la rectification de la pièce de roue dentée (W1) reste constante ou approximativement constante, malgré le fait que la réalisation de l'opération de dressage réduise le diamètre (d0) de la meule à vis sans fin (2).

**Fig. 1**

W1

**Fig. 2A**

**Fig. 2B**

**Fig. 2C**

2

B

d0

b0

**Fig. 3A**

h0 h0

LF RF

b0

Δz

kBL

ZG

**Fig. 3B**

LF    RF

kBL

I0*

ZG

**Fig. 3C**

h0

kBL

Δs

I0*

RF

**Fig. 3D**

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   DE 102012017840 B3